# EUROPÄISCHE PATENTSCHRIFT

(11) **EP 3 048 556 B1**
(45) Veröffentlichungstag und Bekanntmachung des Hinweises auf die Patenterteilung: **29.12.2021**
(21) Anmeldenummer: 15195862.6
(22) Anmeldetag: 23.11.2015
(51) Int. Cl.: G06K 7/10, G02B 7/08

(54) **VERSTELLVORRICHTUNG FÜR EIN OPTISCHES ELEMENT**
ADJUSTING DEVICE FOR AN OPTICAL ELEMENT
DISPOSITIF DE REGLAGE D'UN ELEMENT OPTIQUE

(30) Priorität: 20.01.2015 DE 102015100718
(43) Veröffentlichungstag der Anmeldung: 27.07.2016
(73) Patentinhaber: SICK AG, 79183 Waldkirch (DE)
(72) Erfinder: Anselment, Christoph, 79183 Waldkirch (DE); Burger, Jakob, 77975 Ringsheim (DE)

(56) Entgegenhaltungen:
- EP-B1- 2 498 113
- DE-A1- 19 721 824
- JP-A- S61 199 076
- US-A- 2 155 391
- US-A- 3 496 851
- US-A- 4 777 352
- US-A1- 2005 040 237
- Kathleen Stillman: "What is the difference between Photo Etching and Metal Stamping?", , 26 February 2013 (2013-02-26), XP055656340, Retrieved from the Internet: URL:http://blog.conardcorp.com/blog/bid/22 5570/what-is-the-difference-between-photo- etching-and-metal-stamping [retrieved on 2020-01-09]

## Beschreibung

Die Erfindung betrifft einen optoelektronischen Sensor mit einem optischen Element und einer Verstellvorrichtung für das optisches Element nach dem Oberbegriff von Anspruch 1.

Für manche Anpassungen optoelektronischer Sensoren werden motorisch bewegte optische Elemente benötigt. Ein wichtiges Beispiel ist eine Fokusverstellung, von der Linsen oder Objektive bewegt werden, um einen Sendestrahl zu bündeln oder Bilder über einen geforderten Arbeitsbereich hinweg scharf aufzunehmen. Meistens wird das mit einem Autofokus verbunden, bei dem der Abstand zu dem relevanten Objekt bestimmt und die Fokuslage entsprechend eingestellt wird.

Eine bekannte Fokusverstellung verwendet eine Exzentereinheit, auf der ein exzentrisch gelagertes Kugellager beispielsweise auf eine Stahlwelle abrollt. Dabei nutzt die Verstellung höchstens die Hälfte einer Umdrehung. Bei Antrieb mit einem Schrittmotor ist der Verstellweg deshalb auf eine halbe Umdrehung begrenzt, die Randbereiche sind wegen zu geringer Auflösung unbrauchbar.

Zur Erhöhung der Verstellgenauigkeit pro Schritt können deshalb Kurvenscheiben mit einer linearen Steigung über die volle Umdrehung eingesetzt werden. Die Verstellbewegung erfolgt über ein abrollendes Kugellager auf der Kurvenscheibe. Eine derartige Fokusverstellung, in der ein Objektiv in einer Parallelführung von einer Kurvenscheibe verfahren werden kann, ist aus der EP 2 498 113 B1 bekannt. Diese Kurvenscheibe wird aber aus Kostengründen als Kunststoffspritzteil hergestellt und wird daher zu der lebensdauerbegrenzenden Komponente.

Es ist daher Aufgabe der Erfindung, eine verbesserte Verstellvorrichtung für ein optisches Element anzugeben.

Diese Aufgabe wird durch einen optoelektronischen Sensor nach Anspruch 1 gelöst. Die Verstellvorrichtung nutzt eine Kurvenscheibe und ein Übertragungselement, das mit deren Umfang in Berührung steht. Da die Kurvenscheibe einen über den Umfang variierenden Radius aufweist, insbesondere linear ansteigend, erzeugt sie während einer Drehbewegung eine lineare Verstellbewegung, die durch das Übertragungselement auf das optische Element wirkt. Die Erfindung geht von dem Grundgedanken aus, die Kurvenscheibe aus Metall herzustellen. Dies wird sehr präzise und einfach durch eine ätztechnische Herstellung erreicht.

Ein entsprechendes Herstellungsverfahren ist in Anspruch 8 definiert.

Die Erfindung hat den Vorteil, dass die Kurvenscheibe sehr robust und langlebig ist. Zugleich bietet die Kurvenscheibe dem Übertragungselement eine außerordentlich glatte Abrollkante. Mittels Ätztechnik kann die Kurvenscheibe präzise und vor allem im Vergleich mit anderen Techniken zur Metallbearbeitung sehr kostengünstig hergestellt werden. Bei einer CNC-Herstellung (Computerized Numerical Control) etwa würde trotz der hohen Herstellkosten eine Kurvenscheibe entstehen, die schwerer ist und eine schlechtere Abrollqualität hat. So gelingt es der Erfindung, die hohe Lebensdauer eines auf einer Stahlwelle abrollenden Kugellagers mit der deutlich besseren Verstellbarkeit über eine Kurvenscheibe zu verbinden, ohne die Herstellkosten wesentlich zu verändern.

Die Kurvenscheibe ist vorzugsweise aus gehärtetem Stahl hergestellt. Dadurch ist die Kurvenscheibe besonders widerstandsfähig und langlebig.

Das Übertragungselement weist vorzugsweise ein Kugellager auf. Das Kugellager rollt auf der Ätzkante ab, die besonders glatt ist. Damit funktioniert die Verstellvorrichtung über sehr lange Zeiträume mit großer Präzision.

Die Kurvenscheibe weist gemäß der Erfindung ein erstes Rad in Berührung mit dem Ubertragungselement und ein mit dem ersten Rad verbundenes zweites Rad auf, das als Speichenrad ausgebildet ist. Diese zweiteilige Kurvenscheibe nutzt das erste Rad, um an dessen Umfang die Drehbewegung in eine Verstellbewegung umzusetzen. Ein zweites Rad steht mit dem Antrieb in Verbindung. Dadurch ergibt sich eine größere Gestaltungsfreiheit für das erste Rad, da es selbst keine Verbindung zu einer Welle in seinem Mittelpunkt benötigt. Beide Räder können ätztechnisch aus Metall hergestellt und anschließend beispielsweise mittels Laserschweißen untereinander verbunden werden. Das zweite Rad kann aus einem anderen Metall hergestellt werden als das erste Rad, beispielsweise einem nicht gehärteten Stahl, da es nicht durch das Übertragungselement mechanisch belastet wird.

Das erste Rad ist vorzugsweise als Ring ausgebildet, und das Übertragungselement weist ein Lager und ein Gegenlager auf, die außen und innen mit dem ersten Rad in Berührung stehen. Das erste Rad hat also einen freien Innenraum, in dem sich ein Gegenlager bewegen kann. Das ist möglich, weil die Lagerung in der Mitte der Kurvenscheibe an einer Welle des Antriebs über das zweite Rad erfolgt. Vorzugsweise stehen Lager und Gegenlager einander senkrecht zur Steigung der Kurvenscheibe gegenüber.

Die Verstellvorrichtung ist vorzugsweise eine Fokusverstellung und das optische Element ein Objektiv. Es wird also die Position eines Objektivs beziehungsweise mindestens einer Linse verstellt. Dies ist eine besonders häufige Funktion eines optoelektronischen Sensors mit einem motorisch bewegten Teil, die somit präzise und robust erfüllt wird.

In bevorzugter Weiterbildung ist eine Kamera mit einer erfindungsgemäßen Verstellvorrichtung vorgesehen, die einen Bildsensor aufweist, in dessen optischer Achse ein Objektiv mit dem optischen Element nachgeordnet ist, so dass bei Betätigung des Antriebs durch Bewegung der Kurvenscheibe das Objektiv in seiner Fokuslage einstellbar ist. Die Kamera ist noch bevorzugter als kamerabasierter Codeleser ausgebildet und weist eine Auswertungseinheit auf, die dafür ausgebildet ist, aus Bilddaten des Bildsensors eine Codeinformation eines aufgenommenen Codes auszulesen und auszugeben. Kamerabasierte Codeleser sind in besonderem Maße auf scharfe Bilder angewiesen, um die vollständige Codeinformation zu erfassen. Zugleich wird in üblichen Anwendungen eine rasche und häufige Fokusverstellung erforderlich, so dass sich die mit der Erfindung erreichte robuste, schnelle und genaue Fokussierung über eine große Zahl von Verstellzyklen besonders gut eignet.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung einer Kamera mit Fokusverstellung;
- Fig. 2: eine dreidimensionale Ansicht einer beispielhaften Fokusverstellung mit Kurvenscheibe;
- Fig. 3: eine Ansicht gemäß Figur 2 aus anderer Perspektive in Draufsicht auf die Kurvenscheibe;
- Fig. 4: eine Ansicht ähnlich Figur 3, jedoch unter Ausblendung von Elementen außer der Kurvenscheibe und darauf abrollender Kugellager eines Übertragungselements; und
- Fig. 5: eine dreidimensionale Ansicht einer Kurvenscheibe.

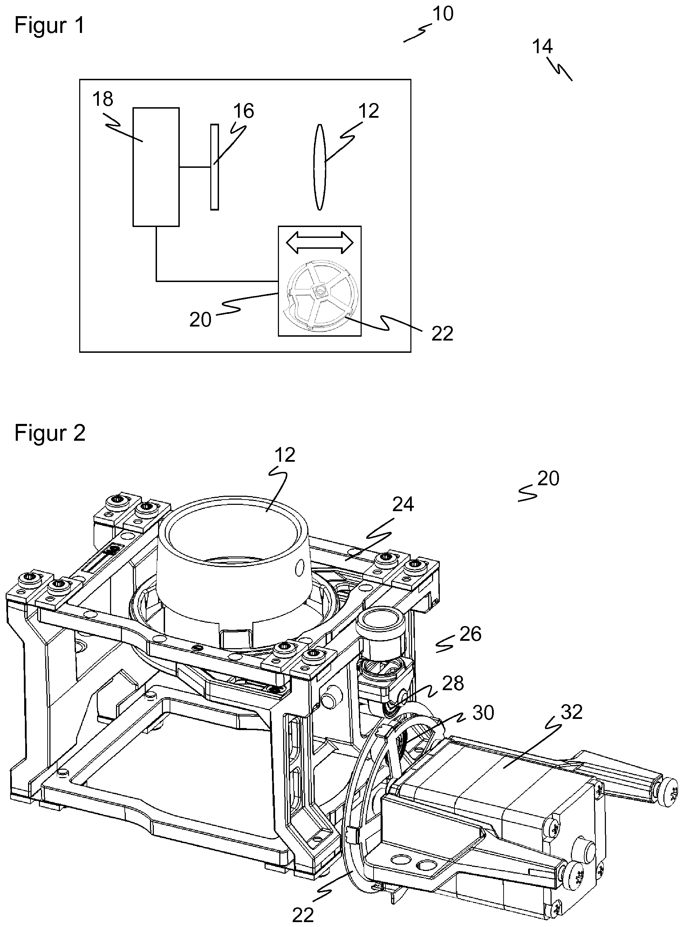

Figur 1 zeigt eine sehr vereinfachte Blockdarstellung einer Kamera 10. Über ein Objektiv 12, das nur durch eine einfache Linse dargestellt ist, wird Licht aus einer Szenerie 14 auf einen Bildsensor 16 geführt und von dort in Form von elektrischen Bilddaten an eine Auswertungseinheit 18 weitergegeben. Um die Kamera 10 auf eine bestimmte Entfernung scharf zu stellen, ist eine Fokusverstelleinheit 20 vorgesehen, welche von der Auswertungseinheit 18 angesteuert wird.

Eine beispielhafte Ausführungsform einer Fokusverstelleinheit 20 mit einer Kurvenscheibe wird weiter unten unter Bezugnahme auf die Figuren 2 bis 4 näher erläutert. Die Fokusverstelleinheit 20 weist eine Kurvenscheibe 22 auf, deren Drehbewegung mechanisch in eine lineare Verstellbewegung des Objektivs 12 übersetzt wird.

Dabei muss die Kurvenscheibe 22 sehr langen Betriebsdauern und einer Vielzahl von Verstellzyklen standhalten und ist deshalb in Ätztechnik mit deren hoher Genauigkeit in der Herstellung von gehärteten Stahlblechteilen beliebiger Konturen gefertigt. Die Ätztechnik als solche ist bekannt und nicht Gegenstand dieser Anmeldung, wurde jedoch bisher nicht für sich auf Kugellager abrollende Getriebeelemente zur Verstellung von optischen Komponenten in optoelektronischen Sensoren eingesetzt.

Die Kamera 10 mit der Fokusverstellung 20 dient nur als Beispiel für ein motorisch bewegtes optisches Element. Denkbar sind auch eine sendeseitige Fokussierung oder die Bewegung eines anderen optischen Elements, etwa eines Schwingspiegels.

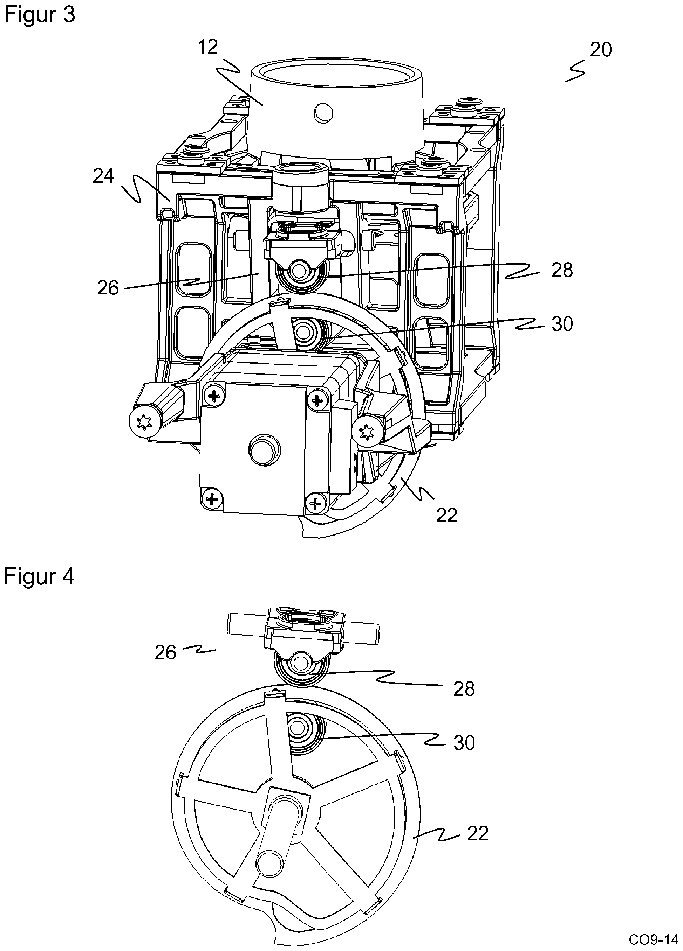

Die Figuren 2 bis 4 zeigen eine mögliche Ausführungsform einer Fokusverstelleinheit 2 für eine Kamera 10. Dabei ist Figur 2 eine dreidimensionale Gesamtansicht von schräg oben, Figur 3 eine weitere dreidimensionale Ansicht nun aber frontal auf die Kurvenscheibe 22 und Figur 4 eine Teilansicht ähnlich Figur 3 jedoch unter Ausblendung von Elementen.

In der Fokusverstelleinheit 20 ist das Objektiv 12 in einer Parallelführung 24 gelagert. Das Objektiv 12 kann in der Parallelführung 24 zur Einstellung einer gewünschten Fokuslage mittels eines Übertragungselements 26 auf und ab bewegt werden. Das Übertragungselement 26 weist ein Kugellager 28, das außen auf der Kurvenscheibe 22 abrollt, sowie ein Gegenlager 30 auf. Eine von einem Antrieb 32, beispielsweise einem Schrittmotor erzeugte Drehbewegung der Kurvenscheibe 22 überträgt sich somit in eine Translationsbewegung des Objektivs 12 unter Parallelverschiebung der Objektivebene.

Wie am besten in Figur 4 zu erkennen, läuft die Kurvenscheibe 22 spielfrei in einer doppelten Kugellagerung aus Kugellager 28 und Gegenlager 30. Dabei nimmt das Gegenlager 30 die Kraft des Kugellagers 28 und einer möglichen Federung auf, mit der das Kugellager 28 zum Erreichen der Spielfreiheit auf die Kurvenscheibe 22 gedrückt wird, und leitet sie somit von einer Welle des Antriebs 32 ab.

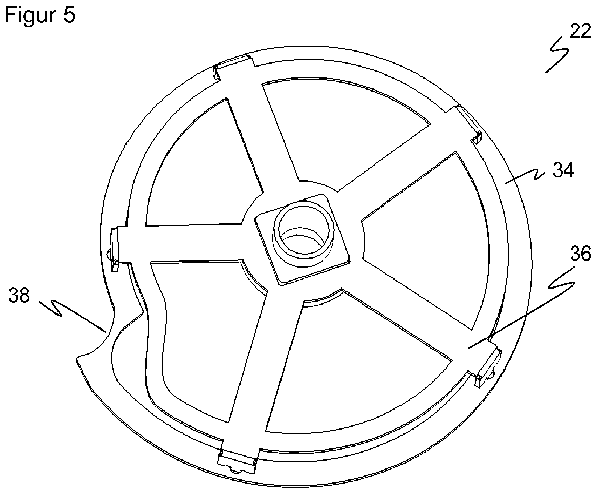

Figur 5 zeigt die Kurvenscheibe 22 nochmals allein in einer dreidimensionalen Ansicht. Um eine Rotation der Kurvenscheibe 22 auch bei Einsatz des Gegenlagers 30 zu ermöglichen, ist die Kurvenscheibe 22 zweiteilig als Kombination von ätztechnisch hergestellten Teilen aufgebaut. Ein erstes Rad 34 weist die eigentliche Kontur der Kurvenscheibe 22 mit einem über den Umfang in gewünschter Weise variierenden Radius auf. Das erste Rad 34 ist jedoch ringförmig aufgebaut, weist also im Inneren kein Material auf. Dadurch kann außen auf dem ersten Rad 34 das Kugellager 28 und innen das Gegenlager 30 abrollen. Die Lagerung auf einer Welle des Antriebs 32 erfolgt mit Hilfe eines zweiten Rads 36, das beispielsweise als Speichenrad ausgebildet und ebenfalls ätztechnisch hergestellt ist. Die Verbindung der beiden Räder 34, 36 kann mittels Laserschweißen erfolgen.

Die Kurvenscheibe 22, insbesondere deren erstes Rad 34, weist vorzugsweise eine gleichmäßige, konstante Steigung über den gesamten Umfang auf. Damit kann eine lineare Übertragung zwischen Drehbewegung der Kurvenscheibe 22 und Verschiebung des Objektivs 12 erreicht werden. In einem vergleichsweise sehr steilen Übergangsbereich 38 wird der Radius nach einer Umdrehung auf den Ausgangswert zurückgeführt.

Durch Herstellung der Kurvenscheibe 22 in Ätztechnik ergibt sich eine glatte Ätzkante, auf der das Kugellager 28 beziehungsweise Gegenlager 30 abrollt, die ruckfrei und mit einem geschliffenen Zylinderstift vergleichbar ist. Außerdem lassen sich kostengünstig andere Kurvenscheiben 22 mit unterschiedlichem Steigungsverhalten realisieren. Dazu ist, anders als beispielsweise bei einer herkömmlichen Kurvenscheibe in Spritzgusstechnik, kein neues Werkzeug erforderlich. Durch die dünne Ausführung der Kurvenscheibe 22, die eine linienförmige Auflagefläche auf dem Kugellager 28 beziehungsweise Gegenlager 30 bildet, können sich keine Schmutzpartikel an den Kontaktstellen auf der Lauffläche ablagern.

## Patentansprüche

1. Optoelektronischer Sensor (10) mit einem optischen Element (12) und einer Verstellvorrichtung (20) für das optische Element (12), wobei die Verstellvorrichtung (20) einen Antrieb (32), eine von dem Antrieb (32) drehbare Kurvenscheibe (22) sowie ein Übertragungselement (26) aufweist, das mit einem Umfang der Kurvenscheibe (22) in Berührung steht und mit dem optischen Element (12) verbunden ist, um so eine Drehbewegung der Kurvenscheibe (22) in eine Verstellbewegung des optischen Elements (12) umzusetzen,
**dadurch gekennzeichnet,**
**dass** die Kurvenscheibe (22) in Ätztechnik aus Metall hergestellt ist und dass die Kurvenscheibe (22) ein erstes Rad (34) in Berührung mit dem Übertragungselement (26) und ein mit dem ersten Rad (34) verbundenes zweites Rad (36) aufweist, das als Speichenrad ausgebildet ist.

2. Optoelektronischer Sensor (10) nach Anspruch 1,
wobei die Kurvenscheibe (22) aus gehärtetem Stahl hergestellt ist.

3. Optoelektronischer Sensor (10) nach Anspruch 1 oder 2,
wobei das Übertragungselement (26) ein Kugellager (28) aufweist.

4. Optoelektronischer Sensor (10) nach einem der vorhergehenden Ansprüche, wobei das erste Rad (34) als Ring ausgebildet ist und das Übertragungselement (26) ein Lager (28) und ein Gegenlager (30) aufweist, die außen und innen mit dem ersten Rad (34) in Berührung stehen.

5. Optoelektronischer Sensor (10) nach einem der vorhergehenden Ansprüche, wobei die Verstellvorrichtung (20) eine Fokusverstellung und das optische Element (12) ein Objektiv ist.

6. Optoelektronischer Sensor (10) nach einem der vorhergehenden Ansprüche, der als Kamera ausgebildet ist, die einen Bildsensor (16) aufweist, in dessen optischer Achse ein Objektiv mit dem optischen Element (12) nachgeordnet ist, so dass bei Betätigung des Antriebs (32) durch Bewegung der Kurvenscheibe (22) das Objektiv (12) in seiner Fokuslage einstellbar ist.

7. Optoelektronischer Sensor(10) nach Anspruch 6,
wobei die Kamera als kamerabasierter Codeleser ausgebildet ist und eine Auswertungseinheit (18) aufweist, die dafür ausgebildet ist, aus Bilddaten des Bildsensors (16) eine Codeinformation eines aufgenommenen Codes auszulesen und auszugeben.

8. Verfahren zur Herstellung eines optoelektronischen Sensors mit einem optischen Element (12) und einer Verstellvorrichtung (20) für das optische Element (12), wobei die Verstellvorrichtung (20) einen Antrieb (32), eine von dem Antrieb (32) drehbare Kurvenscheibe (22) sowie ein Übertragungselement (26) aufweist, das mit einem Umfang der Kurvenscheibe (22) in Berührung steht und mit dem optischen Element (12) verbunden ist, um so eine Drehbewegung der Kurvenscheibe (22) in eine Verstellbewegung des optischen Elements (12) umzusetzen,
**dadurch gekennzeichnet,**
**dass** die Kurvenscheibe (22) in Ätztechnik aus Metall so hergestellt wird, dass sich durch die Herstellung in Ätztechnik eine glatte Ätzkante als Abrollkante ergibt.

## Claims

1. An optoelectronic sensor (10) comprising an optical element (12) and an adjustment device (20) for the optical element (12), the adjustment device (20) comprising a drive (32), a cam disk (22) rotatable by the drive (32), and a transmission element (26) in contact with a circumference of the cam disk (22) and connected to the optical element (12) so as to convert a rotational movement of the cam disk (22) into an adjustment movement of the optical element (12), **characterized in that** the cam disk (22) is made of metal by etching technique and **in that** the cam disk (22) comprises a first wheel (34) in contact with the transmission element (26) and a second wheel (36) connected to the first wheel (34) and formed as a spoke wheel.

2. The optoelectronic sensor (10) according to claim 1,
wherein the cam disk (22) is made of hardened steel.

3. The optoelectronic sensor (10) according to claim 1 or 2,
wherein the transmission element (26) comprises a ball bearing (28).

4. The optoelectronic sensor (10) according to any of the preceding claims,
wherein the first wheel (34) is formed as a ring and the transmission element (26) comprises a bearing (28) and a counter bearing (30), which are in contact with the first wheel (34) externally and internally.

5. The optoelectronic sensor (10) according to any of the preceding claims,
wherein the adjustment device (20) is a focus adjustment device and the optical element (12) is a lens.

6. The optoelectronic sensor (10) according to any of the preceding claims,
which is configured as a camera comprising an image sensor (16) in whose optical axis a lens with the optical element (12) is arranged downstream, so that, when the drive (32) is actuated, the lens (12) can be adjusted in its focus position by moving the cam disk (22).

7. The optoelectronic sensor (10) according to claim 6,
wherein the camera is configured as a camera-based code reader and comprises an evaluation unit (18) configured to read out and output code information of a detected code from image data of the image sensor (16).

8. A method of manufacturing an optoelectronic sensor comprising an optical element (12) and an adjustment device (20) for the optical element (12), the adjustment device (20) comprising a drive (32), a cam disk (22) rotatable by the drive (32), and a transmission element (26) in contact with a circumference of the cam disk (22) and connected to the optical element (12) so as to convert a rotational movement of the cam disk (22) into an adjustment movement of the optical element (12),
**characterized in that** the cam disk (22) is manufactured from metal by etching technology in such a way that the manufacture by etching technology results in a smooth etched edge as a rolling edge.

## Revendications

1. Capteur optoélectronique (10) comprenant un élément optique (12) et un dispositif d'ajustement (20) pour l'élément optique (12), le dispositif d'ajustement (20) comprenant un entraînement (32), un disque à came (22) pouvant être mis en rotation par l'entraînement (32), et un élément de transmission (26) en contact avec une circonférence du disque à came (22) et relié à l'élément optique (12) de manière à convertir un mouvement de rotation du disque à came (22) en un mouvement d'ajustement de l'élément optique (12),
**caractérisé en ce que** le disque à came (22) est réalisé en métal par une technique de gravure et **en ce que** le disque à came (22) comprend une première roue (34) en contact avec l'élément de transmission (26) et une seconde roue (36) reliée à la première roue (34) et formée comme une roue à rayons.

2. Capteur optoélectronique (10) selon la revendication 1,
dans lequel le disque à came (22) est réalisé en acier trempé.

3. Capteur optoélectronique (10) selon la revendication 1 ou 2,
dans lequel l'élément de transmission (26) comprend un roulement à billes (28).

4. Capteur optoélectronique (10) selon l'une des revendications précédentes,
dans lequel la première roue (34) est réalisée sous forme d'anneau et l'élément de transmission (26) comprend un palier (28) et un contre-palier (30), qui sont en contact avec la première roue (34) extérieurement et intérieurement.

5. Capteur optoélectronique (10) selon l'une des revendications précédentes,
dans lequel le dispositif d'ajustement (20) est un dispositif d'ajustement de la mise au point et l'élément optique (12) est un objectif.

6. Capteur optoélectronique (10) selon l'une des revendications précédentes, qui est configuré comme une caméra comprenant un capteur d'images (16) dans l'axe optique duquel est disposée en aval un objectif avec l'élément optique (12), de sorte que, lorsque l'entraînement (32) est actionné, l'objectif (12) peut être ajustable dans sa position de mise au point en déplaçant le disque à came (22).

7. Capteur optoélectronique (10) selon la revendication 6,
dans lequel la caméra est configurée comme un lecteur de code basé sur une caméra et comprend une unité d'évaluation (18) configurée pour lire et sortir des informations de code d'un code détecté à partir de données d'image du capteur d'image (16).

8. Procédé de fabrication d'un capteur optoélectronique comprenant un élément optique (12) et un dispositif d'ajustement (20) pour l'élément optique (12), le dispositif d'ajustement (20) comprenant un entraînement (32), un disque à came (22) pouvant être mis en rotation par l'entraînement (32), et un élément de transmission (26) en contact avec une circonférence du disque à came (22) et relié à l'élément optique (12) de manière à convertir un mouvement de rotation du disque à came (22) en un mouvement d'ajustement de l'élément optique (12),
**caractérisé en ce que** le disque à came (22) est fabriqué à partir de métal par une technologie de gravure de telle sorte que la fabrication par technologie de gravure résulte en un bord gravé lisse en tant que bord de roulement.
